# EUROPÄISCHE PATENTSCHRIFT

(11) **EP 0 895 715 B1**
(45) Veröffentlichungstag und Bekanntmachung des Hinweises auf die Patenterteilung: **23.01.2002**
(21) Anmeldenummer: 98113413.3
(22) Anmeldetag: 17.07.1998
(51) Int. Cl.: A01K 13/00

(54) **Viehputzmaschine**
Cattle cleaning machine
Machine pour nettoyer le bétail

(30) Priorität: 08.08.1997 DE 19734289
(43) Veröffentlichungstag der Anmeldung: 10.02.1999
(60) Teilanmeldung: 01115844.1
(73) Patentinhaber: Mayer, Georg, 84529 Tittmoning (DE)
(72) Erfinder: Mayer, Georg, 84529 Tittmoning (DE)
(74) Vertreter: Bauer, Friedrich, Dipl.-Ing.

(56) Entgegenhaltungen:
- EP-A- 0 287 176
- DE-U- 7 904 082
- DE-U- 9 103 341
- US-A- 3 175 537

## Beschreibung

Die Erfindung betrifft eine Viehputzmaschine mit einer an einer Haltevorrichtung drehbar befestigten, mittels eines Motor antreibbaren Bürsteinrichtung gemäß dem Oberbegriff des Patentanspruches 1.

Aus der DE-U 79 04 082 ist eine Viehputzmaschine dieser Art mit einer einzigen schrägstehenden, zylinderförmigen Bürstenwalze bekannt. Durch die Schrägstellung soll dort erreicht werden, dass sich Kühe unterschiedlicher Größe bürsten können. Damit alle wichtigen Haut- bzw. Fellbereiche mit der Bürste erreicht werden können, kann deren Schrägstellung durch manuelles Verschwenken des Bürstentragarms verändert werden. Nachteilig ist hierbei jedoch, dass sich das Vieh nur in einem kleinen, von der Schrägstellung der Bürstenwalze abhängigen Bereich bürsten kann und das manuelle Verändern der Schrägstellung umständlich ist.

Aus der US-3,175,537 ist eine Viehputzmaschine bekannt, bei der zwei an einem Tragrahmen in einem Winkel von 90° zueinander angeordnete und mit einem Zahnradgetriebe verbundene Bürstenwalzen vorhanden sind. Die beiden Bürstenwalzen bürsten aufgrund ihrer rechtwinkligen Anordnung sowohl eine Seite als auch den Rücken des betreffenden Rindes, wenn sich das Rind unter die Viehputzmaschine stellt und diese aktiviert wird. Die Bürstenwalzen sind in ihrem mittleren Bereich leicht konkav gewölbt, um sich entweder der Seite oder dem Rücken besser anzupassen. Nachteilig ist bei dieser bekannten Viehputzmaschine jedoch, dass sie relativ kompliziert aufgebaut und kostspielig zu fertigen ist.

Aus der EP 0 287 176 A1 ist eine U-förmige Bürsteneinrichtung bekannt, mit welcher sich Rinder gleichzeitig am Rücken als auch an beiden Seiten bürsten können. Es handelt sich dort jedoch um ein feststehendes, d.h. nicht drehbares Bürstenband. Weiterhin ist aus der EP 0 287 176 A1 bekannt, für den Seitenbereich und den Rückenbereich der Rinder getrennte, zylinderförmige oder leicht konische Bürstenwalzen vorzusehen.

Aus der DE 91 03 341 U1 ist eine Bürsteneinrichtung mit zwei zylinderförmigen, in einem Winkel von etwa 100' angeordneten und mit einem Wellengelenk verbundenen Bürstenwalzen bekannt.

Der Erfindung liegt die Aufgabe zugrunde, eine Viehputzmaschine der eingangs genannten Art zu schaffen, welche bei besonders einfachem und kostengünstigem Aufbau ein effektives, an die Bedürfnisse der Tiere möglichst optimal angepasstes Bürsten ermöglicht.

Diese Aufgabe wird erfindungsgemäß durch die Merkmale des Anspruches 1 gelöst. Vorteilhafte Ausführungsformen der Erfindung sind in den weiteren Ansprüchen beschrieben.

Bei der erfindungsgemäßen Viehputzmaschine hat die Bürstenwalze die Form eines Rotationshyperboloids, das sowohl mit einer Seite als auch gleichzeitig zumindest teilweise mit dem Rücken des zu bürstenden Viehs in Anlage bringbar ist.

Erfindungsgemäß wird auch ohne Veränderung der Schrägstellung der Bürstenwalze ein umfassendes Bürsten des Viehs erreicht. Die konkave Form der Bürste ist hierzu zweckmäßigerweise so an die Rundung des Viehs angepasst, dass die Bürstenwalze mit einem Großteil ihrer gesamten Länge gleichzeitig an dem betreffenden Vieh anliegt. Die erfindungsgemäße Viehputzmaschine kann äußerst einfach aufgebaut sein und kostengünstig hergestellt werden, da keine Gelenkverbindung zwischen zwei Walzen erforderlich ist. Auch die Haltevorrichtung kann, da nur eine einzige Walze vorhanden ist, sehr einfach strukturiert sein. Es ergeben sich im Vergleich zu Zweiwalzen-Vorrichtungen wesentlich weniger Verschleißteile, wodurch die Haltbarkeit und Zuverlässigkeit von Einwalzen-Viehputzmaschinen beibehalten werden kann. Die erfindungsgemäße Viehputzmaschine vereint somit die umfassenderen Bürstmöglichkeiten der Zweiwalzen-Vorrichtungen mit der Einfachheit der bekannten Einbürsten-Vorrichtungen mit sehr einfachen Mitteln.

Vorteilhafterweise weist die Bürstenwalze Borsten auf, die im Bereich der Bürstenwalzenenden steifer sind als im mittleren Bereich der Bürstenwalze. Dies ist deswegen zweckmäßig, da die Borsten im Bereich der Bürstenenden länger als im mittleren Bereich der Bürstenwalze sind und bei gleicher Steifigkeit eher nachgeben würden. Durch die steiferen Borsten im Bereich der Bürstenenden kann dagegen ein im wesentlichen homogenes Steifigkeitsverhalten der Borsten in Längsrichtung der Bürstenwalze gewährleistet werden.

Eine einfache Herstellmöglichkeit der Bürstenwalze ergibt sich, wenn diese aus einer Vielzahl von axial hintereinander angeordneten Bürstenscheiben besteht. Hierdurch ist auch der gezielte Austausch einzelner Bürstenscheiben möglich, falls nicht die gesamte Bürstenwalze, sondern nur einzelne Bürstenscheiben ausgetauscht werden sollen.

Die Erfindung wird nachfolgend anhand der Zeichnungen beispielhaft näher erläutert. In diesen zeigen:
- Figur 1 :: eine erste Ausführungsform der erfindungsgemäßen Viehputzmaschine, und
- Figur 2 :: eine zweite Ausführungsform der erfindungsgemäßen Viehputzmaschine.

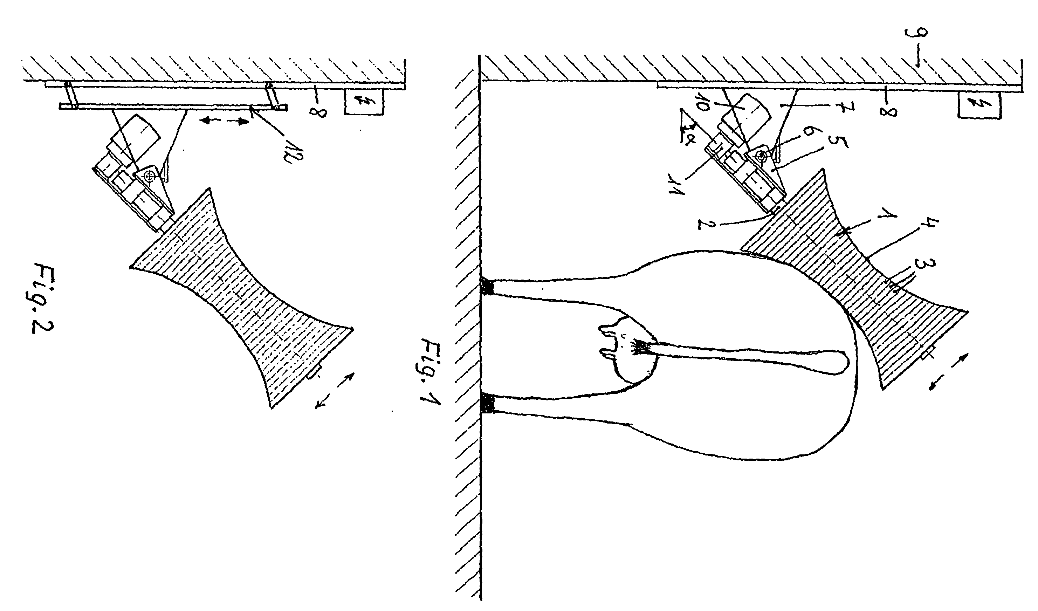

Die in Figur 1 gezeigte Viehputzmaschine besteht im wesentlichen aus einer Bürstenwalze 1, welche die Form eines Rotationshyperboloids hat und aus einer Vielzahl von hintereinander auf einer Bürstenwalzenachse 2 angeordneten Bürstenscheiben 3 besteht. Die Bürstenscheiben 3 haben somit im Bereich der Mitte der Bürstenwalze 1 einen geringeren Durchmesser als im Bereich der beiden Enden der Bürstenwalze 1. Im gezeigten Ausführungsbeispiel schließt die Bürstenwalzenachse 2 mit der Horizontalen einen Winkel α von etwa 45° ein. Die konkave Außenumfangsfläche 4 der Bürstenwalze 1 ist derart gewölbt, daß das zu bürstende Vieh sowohl auf einer Seite als auch bis zu einem bestimmten Maß am Rücken gebürstet wird.

Die Bürstenwalze 1 ist freitragend an ihrem unteren Ende in einer Bürstenachsenhalterung 5 drehbar gehaltert, welche über eine horizontale Schwenkachse 6 an einer Haltekonsole 7 schwenkbar gelagert ist. Die Haltekonsole 7 ist über eine vertikale Wandhalterung 8 an einer vertikalen Wand 9 befestigt.

Die Bürstenwalze 1 wird mittels eines Motors 10 in Umdrehung versetzt, der an der Bürstenachsenhalterung 5 befestigt ist und mit dem unteren Ende der Achse 2 über ein Winkelgetriebe 11 in Drehverbindung steht.

Der Motor 10 kann beispielsweise über einen Bewegungsmelder oder einen Kippschalter, welcher bei einer Schwenkbewegung der Bürstenwalze 1 um die Schwenkachse 6 herum einen Schaltvorgang auslöst, ein- bzw. abgeschaltet werden.

Die in Figur 2 gezeigte Ausführungsform unterscheidet sich von derjenigen der Figur 1 nur dadurch, daß die Haltekonsole 7 mittels eines Parallelogrammgestänges 12 höhenverstellbar an der Wandhalterung befestigt ist. Das Parallelogrammgestänge 12 kann mittels einer nicht dargestellten, beispielsweise von der Decke abgehängten Feder in einer bestimmten Höhenlage gehalten werden, wenn das Vieh die Viehputzmaschine verläßt. Weiterhin kann mittels nicht dargestellter Anschläge oder Federn sichergestellt werden, daß die Bürstenwalze 1 einen bestimmten Winkel α zur Horizontalebene beibehält, wenn kein Vieh die Bürstenwalze 1 hochdrückt.

## Patentansprüche

1. Viehputzmaschine mit einer an einer Haltevorrichtung drehbar befestigten, mittels eines Motors (10) antreibbaren Bürsteinrichtung, die eine einzige schrägstehende, rotationssymmetrische Bürstenwalze (1) umfasst, **dadurch gekennzeichnet, dass** die Bürstenwalze (1) die Form eines Rotationshyperboloids hat, das sowohl mit einer Seite als auch gleichzeitig zumindest teilweise mit dem Rücken des zu bürstenden Viehs in Anlage bringbar ist.

2. Viehputzmaschine nach Anspruch 1, **dadurch gekennzeichnet, dass** die Bürstenwalze (1) Borsten aufweist, die im Bereich der Bürstenwalzenenden steifer sind als im mittleren Bereich der Bürstenwalze (1).

3. Viehputzmaschine nach einem der vorhergehenden Ansprüche, **dadurch gekennzeichnet, daß** die Bürstenwalze (1) aus einer Vielzahl von axial hintereinander angeordneten Bürstenscheiben (3) besteht.

4. Viehputzmaschine nach einem der vorhergehenden Ansprüche, **dadurch gekennzeichnet, dass** die Haltevorrichtung eine an der Wand (9) befestigbare haltekonsole (7) aufweist, an der die Bürstenwalze (1) um eine horizontale Schwenkachse (6) schwenkbar gehaltert ist.

5. Viehputzmaschine nach Anspruch 4, **dadurch gekennzeichnet, dass** die Haltekonsole (7) höhenverstellbar an der Wand (9) befestigt ist.

6. Viehputzmaschine nach Anspruch 5, **dadurch gekennzeichnet, dass** die Haltekonsole (7) übereinParallelprogrammgestänge (12) vertikal verschiebbar an der Wand (9) befestigt ist.

7. Viehputzmaschine nach einem der Ansprüche 4 bis 6, **dadurch gekennzeichnet, dass** der Motor (10) an einer Bürstenachsenhalterung (5) befestigt ist, die an der Haltekonsole (7) schwenkbar befestigt ist.

8. Viehputzmaschine nach einem der Ansprüche 1 bis 6, **dadurch gekennzeichnet, dass** der Motor (10) stationär befestigt und über eine biegsame Welle oder ein Getriebe mit der Bürstenwalze (1) verbunden ist.

## Claims

1. Cattle-cleaning machine with a brushing arrangement which is fastened rotatably on a holding device, can be driven by means of a motor (10) and comprises a single inclined rotationally symmetrical brush roller (1), **characterized in that** the brush roller (1) has the shape of a hyperboloid of revolution which can be brought into contact both with one side and simultaneously at least partly with the back of the animal to be brushed.

2. Cattle-cleaning machine according to Claim 1, **characterized in that** the brush roller (1) has bristles which are stiffer in the region of the brush roller ends than in the central region of the brush roller (1).

3. Cattle-cleaning machine according to one of the preceding claims, **characterized in that** the brush roller (1) consists of a plurality of brush discs (3) arranged axially one behind the other.

4. Cattle-cleaning machine according to one of the preceding claims, **characterized in that** the holding device has a holding bracket (7) which can be fastened on a wall (9) and on which the brush roller (1) is mounted pivotably about a horizontal pivoting axis (6).

5. Cattle-cleaning machine according to Claim 4, **characterized in that** the holding bracket (7) is fastened height-adjustably on the wall (9).

6. Cattle-cleaning machine according to Claim 5, **characterized in that** the holding bracket (7) is fastened vertically displaceably on the wall (9) via a parallelogram linkage (12).

7. Cattle-cleaning machine according to one of Claims 4 to 6, **characterized in that** the motor (10) is fastened on a brush shaft mounting (5) which is fastened pivotably on the holding bracket (7).

8. Cattle-cleaning machine according to one of Claims 1 to 6, **characterized in that** the motor (10) is fastened in a stationary manner and is connected to the brush roller (1) via a flexible shaft or a gear.

## Revendications

1. Machine à nettoyer le bétail, comprenant un agencement à brosse fixe en rotation sur un dispositif support et susceptible d'être entraîné au moyen d'un moteur (10), ledit agencement à brosse comprenant un unique cylindre à brosse (1) disposé en oblique et à symétrie de révolution **caractérisée en ce que** le cylindre à brosse (1) a la forme d'un hyperboloïde de révolution qui peut être amené en contact à la fois avec un côté et simultanément au moins partiellement avec le dos de l'animal à brosser.

2. Machine à nettoyer le bétail selon la revendication 1, **caractérisée en ce que** le cylindre à brosse (1) comporte des poils qui sont plus raides dans la région des extrémités du cylindre à brosse que dans la région médiane du cylindre à brosse (1).

3. Machine à nettoyer le bétail selon l'une des revendications précédentes, **caractérisée en ce que** le cylindre à brosse (1) est constitué d'une pluralité de disques à brosse (3) agencés axialement les uns derrière des autres.

4. Machine à nettoyer le bétail selon l'une des revendications précédentes, **caractérisée en ce que** le dispositif support comprend une console support (7) susceptible d' être fixée sur un mur (9) et sur laquelle le cylindre à brosse (1) est maintenu avec faculté de basculement autour d'un axe de basculement horizontal (6).

5. Machine à nettoyer le bétail selon la revendication 4, **caractérisée en ce que** la console support (7) est fixée avec faculté de réglage en hauteur sur le mur (9).

6. Machine à nettoyer le bétail selon la revendication 5, **caractérisée en ce que** la console support (7) est fixée avec faculté de translation verticale sur le mur (9) au moyen d'une tringlerie à parallélogramme (12).

7. Machine à nettoyer le bétail selon l'une des revendications 4 à 6, **caractérisée en ce que** le moteur (10) est fixé sur une monture (5) pour l'axe de brosse, ladite monture étant fixée avec faculté de basculement sur la console support (7).

8. Machine à nettoyer le bétail selon l'une des revendications 1 à 6, **caractérisée en ce que** le moteur (10) est fixé de manière stationnaire, et raccordé au cylindre à brosse (1) par l'intermédiaire d'un arbre flexible ou d'une transmission.
